# FASCICULE DE BREVET EUROPEEN

(11) **EP 0 694 249 B1**
(45) Date de publication et mention de la délivrance du brevet: **27.06.2001**
(21) Numéro de dépôt: 95450011.2
(22) Date de dépôt: 26.07.1995
(51) Int. Cl.: A01D 90/08

(54) **Dispositif de collecte, de transport de balles et d'alimentation d'une enrubanneuse**
Ballen-Lade-Wagen um Ballen an eine Wickelvorrichtung abzugeben
Bale trailer for loading, transporting and feeding bales to a bale wrapper

(30) Priorité: 27.07.1994 FR 9409406; 24.03.1995 FR 9503734
(43) Date de publication de la demande: 31.01.1996
(73) Titulaire: S.A.R.L. C.G.A.O., 24450 La Coquille (FR)
(72) Inventeur: Dufraisse, Charles, F-24800 Thiviers Eyzerac (FR)
(74) Mandataire: Thébault, Jean-Louis

(56) Documents cités:
- CA-A- 1 073 218
- DE-A- 2 226 075
- US-A- 4 042 140
- US-A- 4 050 598
- US-A- 4 329 102
- US-A- 4 500 242

## Description

La présente invention a pour objet un dispositif de collecte, de transport de balles et d'alimentation d'une enrubanneuse en continu avec les balles ainsi collectées.

On connaît des enrubanneuses en continu comme celle qui est décrite dans la demande de brevet GB-A-2 192 172. De telles machines sont conçues pour disposer en continu un film plastique autour de balles de fourrage, réalisées au moyen d'une presse à balles et alignées les unes à la suite des autres suivant leurs axes d'enroulement. Ces balles sont des cylindres dont le diamètre est sensiblement identique à la hauteur.

Une enrubanneuse comprend, de façon connue, une plate-forme d'alimentation sur laquelle on dépose une balle ramassée dans le champ à l'aide d'une fourche dont est équipé un tracteur, ladite balle étant poussée par un vérin généralement afin de la faire passer à travers un anneau d'enrubannage qui comprend tout simplement un dérouleur automatique de film. La balle est poussée de l'autre côté de l'anneau au fur et à mesure de son enroulement par le film, la vitesse d'avance et la vitesse de déroulement du film étant sychronisées pour obtenir le résultat souhaité et notamment une bonne superposition des couches de film.

Une fois la première balle enrubannée, une deuxième balle est mise en place sur la plate-forme de réception et reçoit la poussée du vérin, ce qui a pour effet de faire passer la deuxième balle à travers l'anneau d'enrubannage mais aussi de pousser la première balle puisque la deuxième balle vient s'appuyer sur la première pour réaliser un boudin continu de fourrage et/ou de paille.

Pour la suite de la description et les revendications, on entend par fourrage, toute plante susceptible d'être conservée à l'état sec ou à l'état humide pour de l'ensilage, dans une protection du type film plastique.

Au fur et à mesure de sa constitution, le boudin est déposé sur place dans le champ à un endroit préalablement déterminé par l'exploitant agricole.

Le châssis qui supporte l'enrubanneuse est monté sur roues pour pouvoir le déplacer et comprend généralement une plate-forme d'évacuation, contigue à l'anneau d'enrubannage et inclinée jusqu'à proximité immédiate du sol, qui reçoit le boudin au fur et à mesure de sa constitution. Cette plate-forme d'évacuation comprend des rouleaux qui permettent au boudin, dont la surface extérieure est un film plastique, d'être translater sans accroc du film.

Au fur et à mesure de l'adjonction de balles, le poussoir déplace, par effet de réaction, la remorque de l'enrubanneuse, si bien que le boudin reste sur place tandis que la remorque recule, ce qui évite de faire riper le boudin, donc le film, sur le sol.

Certaines enrubanneuses comprennent une motorisation intégrée qui délivre la puissance hydraulique nécessaire à la manoeuvre des différents organes d'actionnement, notamment le vérin poussoir et le dérouleur automatique de film.

Une telle opération d'enrubannage est très appréciée des exploitants agricoles mais pour qu'elle soit une réussite, il faut qu'elle soit réalisée à un moment bien déterminé en fonction du produit à enrubanner et surtout le plus rapidement après la sortie de la presse à balles.

Cette opération est longue et fastidieuse car l'exploitant doit circuler sur toute la pièce pour ramasser une à une les balles et ceci est encore plus vrai lorsque l'exploitation présente une grande superficie et/ou lorsque les conditions climatiques se dégradent et que le temps est compté.

On peut imaginer de regrouper les balles sur une remorque mais il faut, dans ce cas, encore plus de matériel car un premier tracteur est nécessaire pour la manutention des balles tant au chargement qu'au déchargement et un autre tracteur est nécessaire pour le déplacement de la remorque. En effet, un tracteur unique, appliqué aux deux opérations, conduit à une perte plus qu'à un gain de temps.

D'autre part, il faut mettre en service l'enrubanneuse et simultanément l'alimenter en balles, ce qui oblige l'exploitant à de nombreuses montées et descentes de son siège ou à une utilisation de personnel supplémentaire dédié à cette simple opération.

La présente invention a pour but de pallier ces inconvénients en proposant une dispositif de collecte, de transport et d'alimentation en balles d'une enrubanneuse ou de toute autre machine de traitement de ces balles. De plus un perfectionnement du dispositif selon l'invention permet de supprimer la motorisation propre à l'enrubanneuse en utilisant la puissance hydraulique du tracteur.

Le dispositif selon l'invention présente de nombreux avantages car il permet une diminution du matériel nécessaire, une diminution des prix et des coûts de fonctionnement des matériels utilisés, une diminution du personnel servant et améliore les conditions de travail de ce personnel. Il permet surtout une très grande rapidité d'exécution de l'opération, dans des conditions optimales de stockage des produits.

A cet effet, le dispositif agricole selon l'invention, déplaçable à l'aide d'un tracteur, muni d'une centrale hydraulique, pour la collecte et le transport de balles fabriquées à l'aide d'une presse à balles et pour l'alimentation d'une enrubanneuse en continu avec les balles ainsi collectées, se caractérise par les éléments techniques de la revendication 1.

Selon une autre caractéristique, la remorque comprend un attelage avec un timon orientable.

L'une des rampes est montée pivotante autour d'un axe parallèle à l'axe longitudinal de la remorque et à proximité immédiate du séparateur, munie de moyens de manoeuvre de façon que la rampe puisse prendre une première position basse parallèle au plateau et une seconde position inclinée par rapport au plateau, vers la rampe juxtaposée.

Selon un autre mode de réalisation, la rampe peut être inclinée et fixe.

Selon une autre variante, la remorque comprend une rampe unique équipée de rouleaux ainsi que des moyens de déplacement des balles comprenant une chaîne en boucle fermée tendue entre deux cabestans de part et d'autre de l'axe longitudinal médian de la remorque, ladite chaîne portant, régulièrement espacées, des barres de poussée des balles.

Selon un mode de réalisation préférentiel de l'invention, les moyens de chargement comprennent une fourche munie de dents, parallèles à l'axe longitudinal de la remorque, fixées sur des bras perpendiculaires à l'axe longitudinal de la remorque. Ces bras sont munis de moyens de manoeuvre et montés pivotants autour d'un axe parallèle à l'axe longitudinal de la remorque, entre une première position dans laquelle la fourche vient au niveau du sol et une seconde position dans laquelle les bras sont relevés.

Un perfectionnement de la présente remorque prévoit des connecteurs fluides adaptés pour coopérer avec des connecteurs conjugués disposés sur l'enrubanneuse, lesdits connecteurs étant prévus pour une connexion/déconnexion automatique.

On peut aussi prévoir un séparateur central dont la partie supérieure comprend un V renversé.

On peut également prévoir un séparateur avec des moyens de manoeuvre comportant des articulations en tête et en pied de chaque poteau de façon à réaliser un parallélogramme déformable par rapport au plateau, dont les positions repliée ou relevée sont obtenues à l'aide d'un vérin.

L'invention est décrite ci-après selon un mode de réalisation particulier, non limitatif, assorti de variantes, en regard des dessins annexés sur lesquels les figures suivantes représentent :
- figure 1, une vue d'une enrubanneuse telle qu'utilisée en combinaison avec le dispositif selon l'invention,
- figure 2, une vue en élévation latérale d'un premier mode de réalisation du dispositif selon l'invention,
- figure 3, une vue de face du premier mode de réalisation du dispositif selon l'invention
- figure 4, une vue en élévation d'un second mode de réalisation du dispositif selon l'invention, et
- figure 5A à 5D, une synoptique de mise en oeuvre du dispositif selon l'invention.

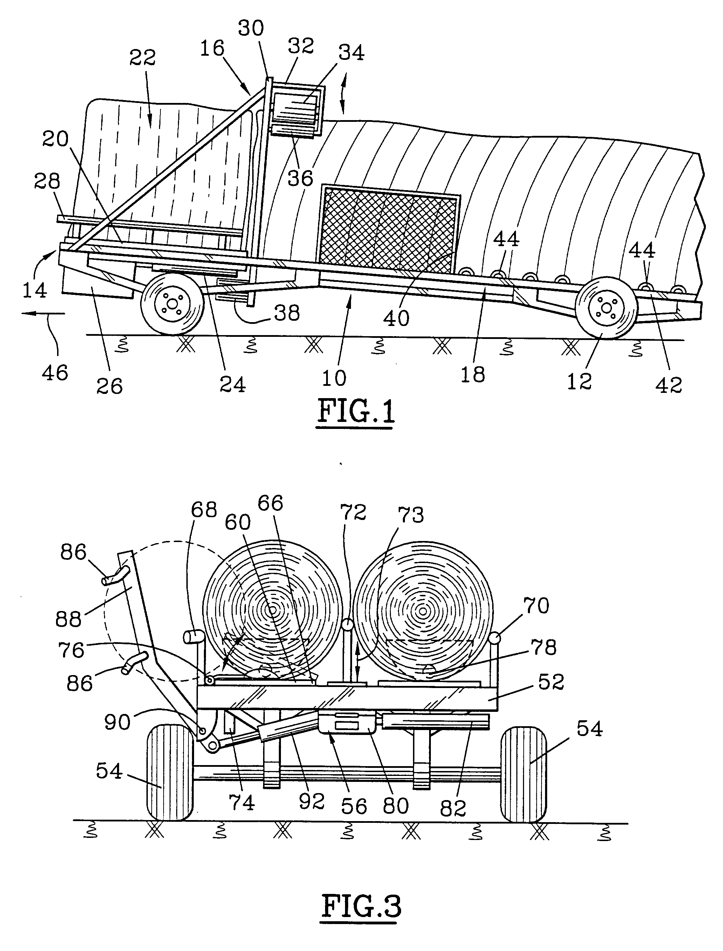

Sur la figure 1, on a représenté une enrubanneuse simplifiée qui comprend les différents éléments nécessaires aux différentes fonctions sans attacher d'importance aux accessoires nécessaires à la réalisation complète et industrielle d'une telle machine.

Un châssis 10, monté sur roues 12 comprend une plate-forme d'alimentation 14, un anneau d'enrubannage 16 et une plate-forme d'évacuation 18.

La plate-forme d'alimentation 14 comprend un plateau 20 sur lequel est déposée la balle 22, telle que représentée, mais également un vérin 24 de poussée de ladite balle à travers l'anneau d'enrubannage 16.

Une motorisation 26 autonome permet de fournir la puissance hydraulique à l'ensemble des organes d'actionnement par un réseau de distribution, non représenté pour la clarté du dessin.

Des rembardes 28 assurent le guidage de la balle et évite qu'elle roule latéralement.

L'anneau d'enrubannage 16 comprend un support fixe annulaire 30 solidaire du châssis et haubanné, dans lequel tourne un chariot 32 portant un dévidoir 34 de film avec les rouleaux tendeurs nécessaires 36.

Un moteur hydraulique est représenté en 38, il assure la mise en rotation du chariot le long du support fixe annulaire 30, plus particulièrement la mise en rotation d'un second support annulaire ( non représenté), coaxial au premier et guidé par lui, le chariot 32 étant solidaire de ce second support.

Une rembarde 40 assure également le guidage en sortie de l'anneau d'enrubannage 16.

La plate-forme 18 d'évacuation comprend une rampe 42, inclinée ou inclinable, équipée de rouleaux 44 permettant la translation du boudin de balles, enrubanné.

De façon connue, la balle est déposée sur le plateau 20, puis le vérin 24 assure sa translation à travers l'anneau d'enrubannage. Le chariot 32 est mis en rotation après avoir assurer l'amorçage de l'enroulement sur l'extrémité de la balle.

Lors de l'avancement de la balle, après constitution du boudin et dépose sur le sol de l'extrémité de ce boudin, le châssis recule dans la direction de la flèche 46 tandis que le boudin reste immobile par rapport au sol.

Le dispositif selon l'invention comprend une remorque 50, avec un plateau 52 monté sur roues 54 et équipé d'un attelage 56 orientable et de moyens de chargement 58.

Le plateau 52, dans ce premier mode de réalisation, comprend deux rampes 60 et 62, juxtaposées et parallèles l'une à l'autre, suivant l'axe longitudinal de la remorque, axe confondu avec la direction de déplacement imposée par les roues.

Ces deux rampes 60 et 62 comprennent avantageusement mais non nécessairement des rouleaux 64, orientés transversalement pour permettre un déplacement aisé en translation suivant l'axe longitudinal ou parallèlement à celui-ci.

La rampe 60, disposée du côté droit par rapport au sens d'avancement est montée à rotation autour d'un axe 66, parallèle à l'axe longitudinal et à proximité immédiate de l'axe central médian du plateau 52.

Deux balustrades latérales 68 et 70 évitent la chute des balles et assurent le guidage ainsi que cela sera expliqué plus avant dans la description.

La rampe 62, disposée à gauche, est fixe par rapport au plateau de la remorque.

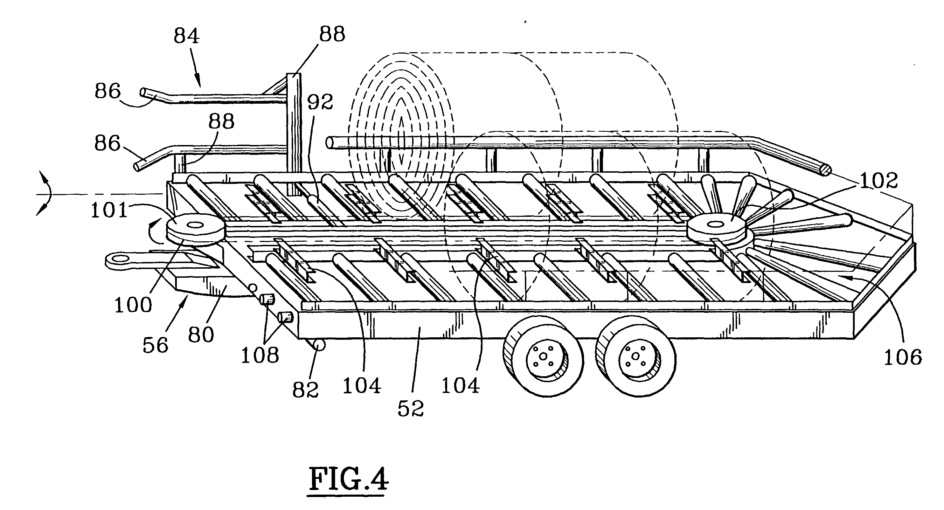

Un séparateur central 72, disposé entre les deux rampes 60 et 62 comprend des moyens d'escamotage 74 dudit séparateur à la surface du plateau. Ces moyens d'escamotage sont symboliquement représentés sur la figure 3 sous la forme d'un vérin qui déplace le séparateur entre une première position haute dans laquelle il fait saillie sur le plateau et sépare les deux couloirs définis par les deux rampes 60 et 62 et une position basse dans laquelle le séparateur est escamoté mettant les deux couloirs en communication. Cette possibilité d'escamotage est symbolisée par la double flèche 73.

On peut remarquer la forme particulière du séparateur, qui comprend au-dessus un V renversé qui facilite la séparation des balles de l'une et l'autre rangée et qui rend plus aisée la remontée dudit séparateur.

Chaque couloir comprend en outre des moyens de manoeuvre des balles situés à droite 76 et à gauche 78, symboliquement représentés par un vérin pour les moyens de manoeuvre 76 à droite et par un trait discontinu pour les moyens de manoeuvre 78 qui comprennent une chaîne avec une plaque formant poussoir, une telle chaîne étant bien connue de l'art antérieur et également utilisée dans la variante qui sera décrite ultérieurement.

Les moyens de manoeuvre situés à droite 76 assurent un déplacement des balles de l'avant vers l'arrière et les moyens de manoeuvre situés à gauche 78 assurent le déplacement des balles de l'arrière vers l'avant.

L'attelage 56 comprend un timon 80 de type connu mais il est pivotant et équipé de moyens d'orientation 82 dans le plan horizontal afin de pouvoir désaxer l'effort de traction. Ces moyens comprennent un vérin dont la position rentrée du piston correspond à la position normale du timon en position centrale parallèle à l'axe longitudinal de la remorque et la position sortie du piston correspond à une angulation du timon vers le côté droit ce qui dégage l'espace devant le couloir gauche 62.

Les moyens de chargement 58 comportent une fourche 84 à deux dents 86, orientées vers l'avant et parallèles à l'axe longitudinal. Deux bras 88 coudés, sur lesquels est fixée cette fourche, sont articulés par rapport au plateau autour d'un axe 90 et équipés de moyens de manoeuvre 92 autour de cet axe. Ces moyens de manoeuvre 92 comprennent un vérin qui, dans une première position de collecte, permet de poser la fourche sur le sol comme une écope et qui, dans une seconde position relevée dans laquelle les bras pivotent en sorte de se rapprocher de la verticale, ainsi que cela est représenté sur la figure 3, permet le chargement du plateau. On peut aussi prévoir dans un agencement particulièrement intéressant, un vérin unique interposé entre les bras et le timon 80, en remplacement des deux vérins 82 et 92. Dans ce cas, soit le timon est claveté et le vérin fait travailler les bras, soit le timon est libre en rotation par retrait de la clavette et le vérin fait travailler les bras.

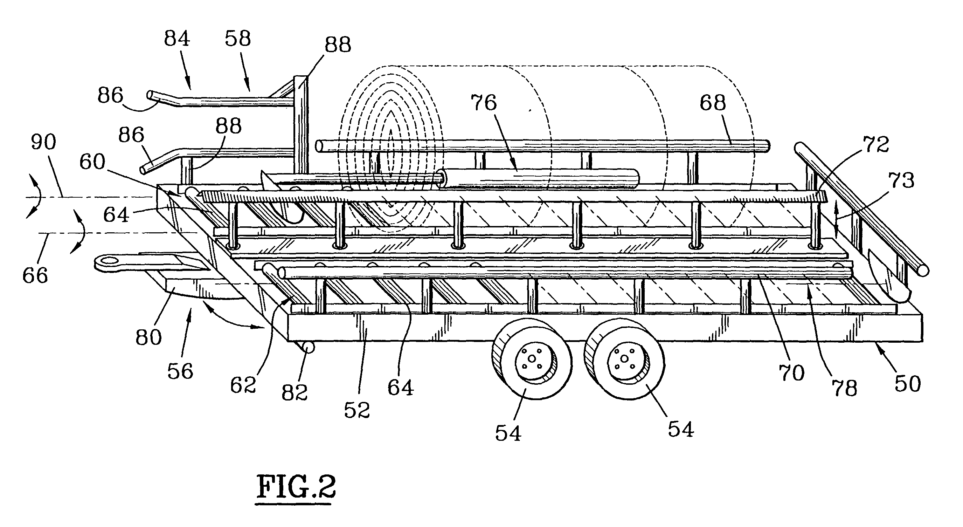

Sur les figures 2 et 3, certaines balles ont été représentées en trait discontinu.

De même sur la figure 3, on a représenté, en trait discontinu, la rampe 60, en position inclinée.

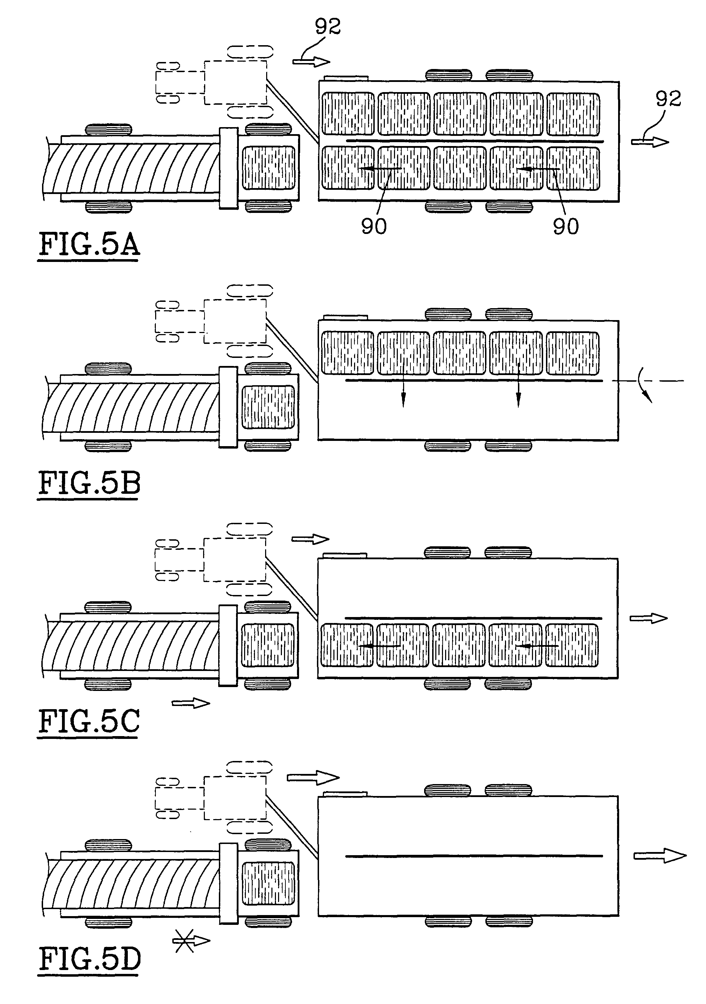

Le fonctionnement du dispositif selon l'invention est indiqué ci-après, en s'appuyant sur les figures 5A à 5D.

L'exploitant utilise une presse à balles pour préparer des balles disséminées dans la pièce travaillée, au fur et à mesure de leur sortie de la presse.

Il amène également l'enrubanneuse sur la pièce, enrubanneuse qu'il dispose au début de l'emplacement où il souhaite stocker le boudin de balles.

Il attèle ensuite la remorque 50, se déplace dans la pièce et collecte les balles une à une.

Pour cela, il abaisse les bras 88 par manoeuvre du vérin 92, les dents 86, formant écope, collectent la balle, l'approche se faisant à vitesse réduite, en sorte que l'axe d'enroulement de la balle soit parallèle aux dents. L'exploitant s'arrête lorsque la balle est disposée sur les dents et par manoeuvre du vérin 92, il relève les bras afin que la balle roule et vienne en appui sur le séparateur qui est en position relevé, formant butée. La première balle est donc en tête de la première rampe 60. L'exploitant se déplace à nouveau vers une autre balle et pendant ce déplacement, il positionne la balle qui vient d'être chargée vers l'arrière de la rampe 60 en actionnant les moyens 76.

Il procède ainsi de suite jusqu'à compléter le couloir de la rangée 60. Il escamote ensuite le séparateur central 72 par actionnement du vérin 74 et simultanément fait pivoter la rampe 60 autour de l'axe 66, ce qui a pour effet immédiat de faire rouler les balles dans le couloir correspondant à la rampe 62.

Le séparateur est ensuite relevé afin qu'il sépare à nouveau les deux couloirs définis par les deux rampes.

L'exploitant complète à nouveau le couloir défini par la rampe 60 si bien que la remorque se trouve complétée avec un nombre de balles important, une dizaine pour citer un ordre de grandeur.

L'exploitant rejoint l'enrubanneuse qu'il aborde en manoeuvrant préalablement le vérin 82 de façon à désaxer le timon, en sorte que la remorque 50 peut approcher la plate-forme d'alimentation de l'enrubanneuse, en plaçant la rampe 62 dans l'alignement de l'enrubanneuse, ainsi que représenté sur la figure 5A.

L'exploitant peut alors mettre en marche l'enrubanneuse et par manoeuvre de la chaîne 78, il alimente la plate-forme de ladite enrubaneuse avec les balles disposées dans le couloir correspondant à la rampe 62, en les faisant circuler de l'arrière vers l'avant. Ceci est indiqué par les flèches 90 et la conséquence est le recul de l'enrubanneuse mais aussi de l'ensemble remorque 50 et du tracteur par effet de réaction, ainsi qu'indiqué par les flèches 92.

L'exploitant continue cette opération jusqu'à ce que les cinq balles soient enrubannées puis il effectue la manoeuvre qui consiste à basculer les balles du couloir défini par la rampe 60 dans le couloir défini par la rampe 62 afin d'enrubanner ces cinq nouvelles balles à la suite des cinq premières. Cette opération s'effectue par abaissement du séparateur et pivotement de la rampe 60 autour de l'axe 66. Ceci est représenté sur la figure 5B.

Sur la figure 5C, les balles sont enrubannées par poussée vers l'enrubanneuse jusqu'à ce que le plateau se trouve vide de balles, ce qui correspond à l'illustration de la figure 5D.

L'enrubanneuse est arrêtée et l'ensemble tracteur-remorque est séparé de l'enrubanneuse pour que l'exploitant réalise un nouveau cycle.

De nombreuses variantes sont possibles et l'une d'elles est représentée sur la figure 4. Dans ce cas les moyens de chargement 58 sont identiques mais le plateau est agencé différemment. En effet il est prévu une chaîne 100, tendue entre deux cabestans avant 101 et arrière 102. La chaîne est disposée dans la zone centrale et chacun de ses brins est équipé de barres de poussée 104 qui sont régulièrement réparties le long de la chaîne et prévues pour coopérer par poussée avec les balles.

De plus le plateau comprend une rampe en U 106, dont les branches correspondent aux rampes 60 et 62 du mode de réalisation précédent.

Ces rampes sont équipées de rouleaux tout comme précédemment mais dans le virage, les rouleaux sont coniques afin d'assurer une bonne rotation des balles. L'homme de l'art doit prévoir toute balustrade de guidage pour que la balle tourne sans se bloquer dans le virage et sans être éjectée.

Ce mode de réalisation permet au moyen d'une chaîne unique de faire circuler les balles une par une dès la dépose sur la remorque par les bras 88 qui restent inchangés par rapport au mode de réalisation précédent.

Les autres parties constitutives de la remorque restent inchangées elles aussi et portent les mêmes références que précédemment.

Le choix du mode de réalisation est guidé par le type de balles et par leurs dimensions.

Des perfectionnements sont envisageables à partir de ces modes de réalisation et notamment on peut prévoir de connecter, pour chaque cycle d'enrubannage, l'hydraulique du tracteur, à l'enrubanneuse, ce qui évite l'installation d'une motorisation particulière et son entretien surtout que l'utilisation est très épisodique. Ceci n'est généralement pas très souhaitable pour les moteurs thermiques.

On peut aussi envisager une connexion hydraulique automatique entre la remorque et l'enrubanneuse, par une approche précise de la remorque et par l'installation de connecteurs fluides 108 adaptés, sur ladite remorque et sur l'enrubanneuse.

Dans le cas du mode de réalisation principal comprenant une rampe montée pivotante, on peut aussi envisager une sortie des balles par l'arrière de la remorque. Ceci peut permettre la suppression d'un attelage orientable mais avec la difficulté d'approche qui en résulte car la manoeuvre est rendue délicate pour l'exploitant du fait de la non visibilité.

Bien entendu la description qui vient d'être faite l'a été pour des balles rondes mais elle serait identique pour des balles carrées à l'exception de la variante à rampe en U qui peut être plus difficile à mettre en oeuvre.

De la même façon, il a été prévu une rampe inclinable 60, mais cette rampe peut être fixe et inclinée en permanence.

Le résultat diffère en ce que la balle déposée, roule immédiatement sur la rampe 62, une à une et non pas d'un seul coup pour toute la rangée. Dans ce cas, le séparateur est escamoté dès le début du chargement et il n'est relevé qu'après le remplissage complet de la rampe 62, avant de procéder au remplissage de la rampe 60.

De la même façon, une variante particulièrement intéressante consiste à prévoir un séparateur escamotable par pliage, dans l'axe longitudinal de la remorque. Les pieds du séparateur sont articulés en partie haute par rapport à la barre horizontale portant le V renversé et en partie basse par rapport au plateau, ces axes étant transversaux. Un vérin assure le redressement ou l'abaissement du séparateur puisque l'ensemble constitue un parallélogramme déformable.

De même, une autre variante consiste à recourir à au moins un vérin, orienté transversalement, qui est équipé d'un poussoir et peut ainsi transférer les balles d'une rampe à l'autre.

De tels agencements sont à la portée de l'homme de l'art et sont adaptés en fonction des besoins.

Les rampes sont dessinées comme des plaques mais il est possible de prévoir des berceaux en forme, prévus pour coopérer au mieux avec les balles. Le basculement est, dans ce cas, obtenu par un pivotement des deux berceaux l'un par rapport avec un escamotage de la partie centrale comportant, par exemple, des biellettes articulées.

## Revendications

1. Dispositif agricole déplaçable à l'aide d'un tracteur, muni d'une centrale hydraulique, comportant une remorque (50) munie de moyens de chargement (58) de balles fabriquées par une presse à balles, d'au moins une rampe (60, 62, 106) prévue pour recevoir ces balles et des moyens de déplacement de ces balles sur ladite rampe, convenant pour l'alimentation en continu d'une enrubanneuse avec les balles ainsi collectées et transportées, caractérisé en ce que la remorque comprend deux rampes (60,62) juxtaposées, parallèles à l'axe longitudinal de la remorque et un séparateur (72) central avec des balustrades (68,70) latérales de maintien et de guidage des balles disposées sur ces rampes, respectivement de l'avant vers l'arrière et de l'arrière vers l'avant.

2. Dispositif agricole selon la revendication 1, caractérisé en ce que la remorque comprend un attelage (56) avec un timon (80) orientable.

3. Dispositif agricole selon la revendication 1 ou 2, caractérisé en ce que l'une des rampes (60) est montée pivotante autour d'un axe (66) parallèle à l'axe longitudinal de la remorque et à proximité immédiate du séparateur (72), munie de moyens de manoeuvre (74) de façon que la rampe puisse prendre une première position basse parallèle au plateau et une seconde position inclinée par rapport au plateau, vers la rampe juxtaposée (62).

4. Dispositif agricole selon la revendication 1 ou 2, caractérisé en ce que l'une des rampes (60) est montée inclinée transversalement vers la rampe juxtaposée, en position fixe.

5. Dispositif agricole selon la revendication 1 ou 2, caractérisé en ce que la remorque comprend une rampe unique (106) en U, équipée de rouleaux ainsi que des moyens de déplacement des balles comprenant une chaîne (100) en boucle fermée tendue entre deux cabestans (101,102) de part et d'autre de l'axe longitudinal médian de la remorque, ladite chaîne portant, régulièrement espacées, des barres de poussée (104) des balles.

6. Dispositif agricole selon l'une quelconque des revendications précédentes, caractérisé en ce que les moyens de chargement (58) comprennent une fourche (84) munie de dents (86) parallèles à l'axe longitudinal de la remorque, fixées sur des bras (88) perpendiculaires à l'axe longitudinal de la remorque, munis de moyens de manoeuvre (92) et montés pivotants autour d'un axe (90) parallèle à l'axe longitudinal de la remorque, entre une première position dans laquelle la fourche (84) vient au niveau du sol et une seconde position dans laquelle les bras (88) sont relevés.

7. Dispositif agricole selon l'une quelconque des revendications précédentes, caractérisé en ce que la remorque comprend des connecteurs fluides (108) adaptés pour coopérer avec des connecteurs conjugués disposés sur l'enrubanneuse, lesdits connecteurs étant prévus pour une connexion/déconnexion automatique.

8. Dispositif agricole selon l'une quelconque des revendications précédentes, caractérisé en ce que le séparateur central (72) comprend à sa partie supérieure un V renversé.

## Claims

1. Agricultural device able to be moved by a tractor, fitted with a hydraulic power unit, comprising a trailer (50) provided with loading means (58) for bales made with a bale press, with at least one ramp (60,62,106) for receiving the bales and means for moving the bales on said ramp, adapted for feeding a banding machine continuously with the bales so collected and transported, characterized in that the trailer comprised two juxtaposed ramps (60,62), parallel to the longitudinal axis of the trailer and a central separator (72) with lateral rails (68,70) for supporting and guiding the bales received on these ramps, respectively from front towards the rear and from the rear towards the front.

2. Agricultural device according to claim 1, characterized in that the trailer includes a coupling device (56) with an orientable drawbar.

3. Agricultural device according to claim 1 or 2, characterized in that one of the ramps (60) is mounted pivoting around a spindle (66) parallel to the longitudinal axis of the trailer and immediately close to the separator (72), provided with maneuvering means (74) so that the ramp is able to take up a first low position parallel to the plate and a second position slanted with respect to the plate, towards the juxtaposed ramp.

4. Agricultural device according to claim 1 or 2, characterized in that one of the ramp (60) is mounted slanted transversally towards the juxtaposed ramp, in a fixed position.

5. Agricultural device according to claims 1 or 2, characterized in that the trailer includes a single U-shaped ramp (106), equipped with rollers, as well as means for moving the bales and including a closed loop chain (100) taut between two capstans on both sides of the longitudinal median axis of the trailer, said chain bearing, regularly spaced bars (104).

6. Agricultural device according to anyone of the preceding claims, characterized in that the loading means (58) include a fork (84) fitted with teeth (86) parallel to the longitudinal axis of the trailer and secured to arms (88) perpendicular to the longitudinal axis of the trailer fitted with maneuver means (92) and mounted pivoting around a spindle (90) parallel to the longitudinal axis of the trailer between a first position in which the fork (84) is at the level of the ground and a second position where the arms (88) are lifted up.

7. Agricultural device according to any one of the preceding claims, characterized in that the trailer includes fluid connectors (108) adapted to cooperate with conjugated connectors being provided for automatic connection/disconnection.

8. Agricultural device according to any one of the preceding claims, characterized in that the central separator (72) includes at its upper portion an inverted V.

## Patentansprüche

1. Landwirtschaftliches Gerät, das mit Hilfe eines Traktors bewegbar ist und mit einer Hydraulikzentrale versehen ist, umfassend einen Anhänger (50), der mit Mitteln (58) zum Aufladen von durch eine Ballenpresse hergestellten Ballen, wenigstens einer Rampe (60, 62, 106), die dazu vorgesehen ist, diese Ballen aufzunehmen, und Mitteln zum Verschieben dieser Ballen auf der Rampe versehen ist, wobei sich das Gerät für die ununterbrochene Beschickung einer Umbandelungsmaschine mit den auf diese Weise gesammelten und transportierten Ballen eignet, dadurch gekennzeichnet, daß der Anhänger zwei nebeneinander angeordnete Rampen (60, 62), die zur Längsachse des Anhängers parallel sind, sowie eine mittige Trennvorrichtung (72) umfaßt, wobei seitliche Geländer (68, 70) zum Halten und Führen der auf diesen Rampen angeordneten Ballen von vorn nach hinten bzw. von hinten nach vorn vorgesehen sind.

2. Landwirtschaftliches Gerät nach Anspruch 1, dadurch gekennzeichnet, daß der Anhänger eine Kupplung (56) mit einer orientierbaren Deichsel (80) umfaßt.

3. Landwirtschaftliches Gerät nach Anspruch 1 oder 2, dadurch gekennzeichnet, daß eine der Rampen (60) schwenkbar um eine zur Längsachse des Anhängers parallele Achse (66) und in direkter Nähe der Trennvorrichtung (72) angebracht ist und mit Betätigungsmitteln (74) versehen ist, damit die Rampe eine erste untere Position parallel zur Plattform und eine zweite Position, die in bezug auf die Plattform zu der daneben befindlichen Rampe (62) geneigt ist, einnehmen kann.

4. Landwirtschaftliches Gerät nach Anspruch 1 oder 2, dadurch gekennzeichnet, daß eine der Rampen (60) so angebracht ist, daß sie quer zu der daneben angeordneten Rampe in der festen Position geneigt ist.

5. Landwirtschaftliches Gerät nach Anspruch 1 oder 2, dadurch gekennzeichnet, daß der Anhänger eine einzige U-förmige Rampe (106) umfaßt, die mit Rollen sowie mit Mitteln zum Bewegen der Ballen ausgerüstet ist, die eine Kette (100) in geschlossener Schleife umfassen, die zwischen zwei Antriebsrollen (101, 102) beiderseits der mittigen Längsachse des Anhängers gespannt ist und in regelmäßigen Abständen Schubstäbe (104) für die Ballen trägt.

6. Landwirtschaftliches Gerät nach einem der vorhergehenden Ansprüche, dadurch gekennzeichnet, daß die Beladungsmittel (58) eine Gabel (84) umfassen, die mit Zähnen (86) versehen ist, die zur Längsachse des Anhängers parallel sind und an Armen (88) befestigt sind, die zur Längsachse des Anhängers senkrecht sind, mit Betätigungsmitteln (92) versehen sind und so angebracht sind, daß sie um eine zur Längsachse des Anhängers parallele Achse (90) zwischen einer ersten Position, in der die Gabel (84) die Höhe des Bodens erreicht, und einer zweiten Position, in der die Arme (88) angehoben sind, schwenkbar sind.

7. Landwirtschaftliches Gerät nach einem der vorhergehenden Ansprüche, dadurch gekennzeichnet, daß der Anhänger Fluidverbinder (108) umfaßt, die so beschaffen sind, daß sie mit zugehörigen Verbindern, die an der Umbandelungsmaschine angeordnet sind, zusammenwirken, wobei diese Verbinder für einen automatischen Anschluß/eine automatische Trennung vorgesehen sind.

8. Landwirtschaftliches Gerät nach einem der vorhergehenden Ansprüche, dadurch gekennzeichnet, daß die mittige Trennvorrichtung (72) in ihrem oberen Abschnitt ein umgekehrtes V aufweist.
